# EUROPEAN PATENT SPECIFICATION

(11) **EP 1 039 563 B1**
(45) Date of publication and mention of the grant of the patent: **30.07.2003**
(21) Application number: 00302332.2
(22) Date of filing: 22.03.2000
(51) Int. Cl.: H01M 2/02, H01M 2/06, H01M 2/26

(54) **A method for treating contact leads on electrochemical cells so as to achieve improved hermeticity and hermetically sealed electrochemical cells derived therefrom.**
Methode zur Behandlung von Kontaktanschlüssen an elektrochemischen Zellen, zur Erzielung verbesserter Dichtheit, und hermetisch verschlossene elektrochemische Zellen die damit hergestellt sind
Une méthode pour traiter les fiches de contact de cellules électrochimiques pour obtenir une herméticité accrue et cellules électrochimiques hermétiquement scéllées

(30) Priority: 22.03.1999 US 125638 P
(43) Date of publication of application: 27.09.2000
(73) Proprietor: Thomas & Betts International, Inc., Sparks, Nevada 89434 (US)
(72) Inventor: Xie, Like, Naperville, Illinois 60564 (US); Alamgir, Mohamed, Bolingbrook, Illinois 60440 (US); Tamburrino, Peter C., Naperville, Illinois 60565 (US)
(74) Representative: Howick, Nicholas Keith

(56) References cited:
- US-A- 4 822 377

## Description

### FIELD OF THE INVENTION

The present invention is directed to an economical method of preparing contact leads for electrochemical cells and the cells derived therefrom. In particular, the present invention relates to a method of treating metal contact tabs on electrochemical cells and thereafter packaging said cells in a final closure sealing member so as to achieve an inexpensively manufactured, compact cell having optimal hermeticity.

### BACKGROUND OF THE INVENTION

Electrochemical cells represent the state-of-the-art in rechargeable battery technology, Such batteries are often packaged in a rechargeable polymer battery pack. This pack utilizes ion conductors having a predetermined formula that is known in the art to provide high energy density, high performance reliability and a prolonged shelf life. Significant weight savings are realized with electrochemical cells which meet the need for reduced battery size and shape in diminutive portable electronic devices. These cells further demonstrate superior results when subjected to high-rate cycling, mechanical shock, thermal shock, vibration, over voltage, under voltage, short circuits, automobile battery charging, nail penetration and high pressure tests. These properties make electrochemical cells increasingly desirable for use in a wide range of applications, including mobile phones, pagers, laptop computers, hand held terminals and wireless communication devices. In the course of the discussion herein, the terms "battery" and "cell" will be used interchangeably.

Hermeticity is also a highly desirable property in an electrochemical cell. The prior art recognizes that it is extremely important for a hermetically sealed cell to retain its manufactured, gas tight condition, even after prolonged periods of storage or use. Conventional battery technologies often use metallic casings to achieve sufficient rigidity and hermeticity. In electrochemical cells having a metal casing, one means of providing a hermetic seal is by welding a seal member in the casing. The casing adjacent the weld, however, conducts heat to the electrolyte contained therein, invariably inducing electrolyte evaporation. When these gases escape from the cell casing, they leave pinholes in the weld that compromise the hermeticity of the entire cell structure. Simply welding a seal in a metal casing, therefore, does not necessarily assure gas tight hermeticity. In addition, metal casings, although demonstrating an inherently rugged construction, suffer from significant drawbacks, including excessive weight and limitation in construction (i.e. being capable of limited formation in only simple geometric shapes such as cylinders and rectangles).

These and related disadvantages can be overcome, however, by instead employing final closure sealing members such as multi-layered plastic sealing pouches as cell casings. The bonding of the electrodes to the separator in an electrochemical cell eliminates the need for rigid cell casings, thereby reducing the weight of the cell significantly. Accordingly, electrochemical cells may be packaged in thin, flexible multi-layered pouches that exhibit reduced weight as well as formability in a plethora of geometries having minimum thickness. The use of such sealing members has been popularized in recent years for use with electrochemical cells such as polymer electrolyte-based lithium or lithium ion batteries like those described in commonly assigned U.S. Patent Application No. 09/405,200.

Multi-layered packaging for electrochemical cells typically includes at last one layer of a thin metal foil, such as aluminum, to provide an oxygen and moisture barrier. The foil layer is then typically encapsulated between a sheet of a polymer material having superior mechanical integrity, such as nylon or polyester, and a layer of a low temperature polyolefin, such as polyethylene, for beat sealing to form a laminate. This combination of polymer layers provides a seal that, when given sufficient width, is hermetic over a prolonged period of time.

Achievement of hermeticity in this manner is limited by the need for an electrical connection from the cell inside the pouch to external contacts via contact leads, often in the form of metal contact tabs. The contact tabs transport current to and from the negative and positive terminals of the cell. In order to achieve a strong bond, sealing of plastic sealing pouches is typically carried out at an elevated temperature and pressure. Tab thickness is therefore restricted to allow the heat seal layer to flow around the tabs to produce a hermetic seal. When this is done for an electrochemical cell, the elevated temperature and pressure can cause deformation of the packaging material, as well as penetration of the metallic tabs through the adhesive layer. The tabs must therefore extend beyond the package and past the seal area, consequently weakening the strong and homogeneous adhesive/adhesive bond that typically characterizes the seal. Thus, unintentional electrical shorting between individual tabs and between the tabs and the metal foil laminates remains a prominent concern.

It is therefore desirable to provide an improved process for ensuring hermeticity and thereby prevent degradation of the cell to the detriment of cell performance and user safety.

### SUMMARY OF THE INVENTION

It is an object of the present invention to provide an improved method of manufacturing electrochemical cells.

It is another object of the present invention to provide an improved seal for electrochemical cells so as to achieve hermeticity of the electrolyte and contact tabs thereby.

It is still another object of the present invention to facilitate flexibility in electrochemical cell design.

It is a further object of the present invention to augment the hermeticity of an electrochemical cell while providing a compact cell configuration.

it is yet another object of the present invention to provide a low profile hermetic seal for an electrochemical cell that accommodates reduced-dimension receptacles and improves the appearance of the cell.

It is still a further object of the present invention to provide a method by which a metal-to-adhesive bond can be strengthened for hermetic sealing of a plastic cell casing.

It is yet another object of this invention to develop a rapid and inexpensive sealing method that is amenable to high-speed automation.

In the efficient attainment of these and other objects, the present invention provides a method of hermetically sealing an electrochemical cell. In the disclosed method, a coating of an adhesive composition is applied to an external metal tab that serves as a contact lead from the cell to a device within which the cell is implanted. The adhesive coats and heremetically seals the tab surface thereby. The coating process can be executed by directly heat-sealing an adhesive film onto the tab surface. Alternatively, an aqueous suspension of the adhesive composition can be sprayed onto the tab surface, or the tab may be roll coated in the composition and thereafter subjected to heat treatment, causing the adhesive to melt and flow. The coated tab is thereafter welded to a corresponding current collector in the form of a metal foil. The complete cell assembly is heat-sealed in a final closure sealing member such that the sealed tabs extend therethrough as disclosed in independent claims 1 and 13.

### BRIEF DESCRIPTION OF THE DRAWINGS

Figure 1 shows a schematic representation of an electrochemical cell of the present inventive process prior to sealing thereof in a final closure sealing member.
Figure 2 shows a metal tab of the electrochemical cell of Figure 1 after sealing of the final closure sealing member therearound.

### DETAILED DESCRIPTION OF THE PREFERRED EMBODIMENTS

The present invention is directed to a hermetically sealed electrochemical cell assembly and a method of manufacture thereof. Such an assembly is made up of a plurality of cells having contact leads in the form of metal tabs extending therefrom for the transmission of electrical current between the cell and a device within which it is employed. Each metal tab is defined by opposed planar surfaces, one or both of which receive a coating of an adhesive composition thereon for the purpose of hermetically sealing the tab. The cell along with the treated tabs is thereafter encased in a final closure sealing member such as a plastic cell casing that is heat sealed so as to encapsulate the electrochemical cell therein.

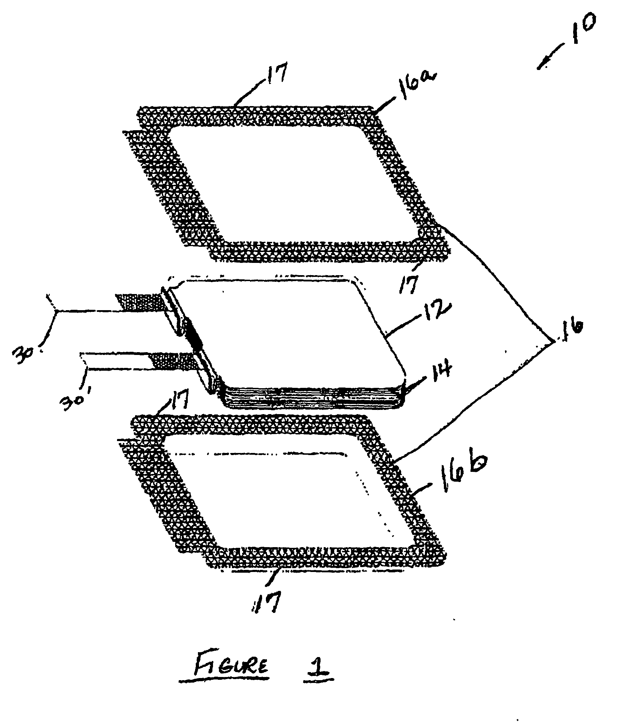

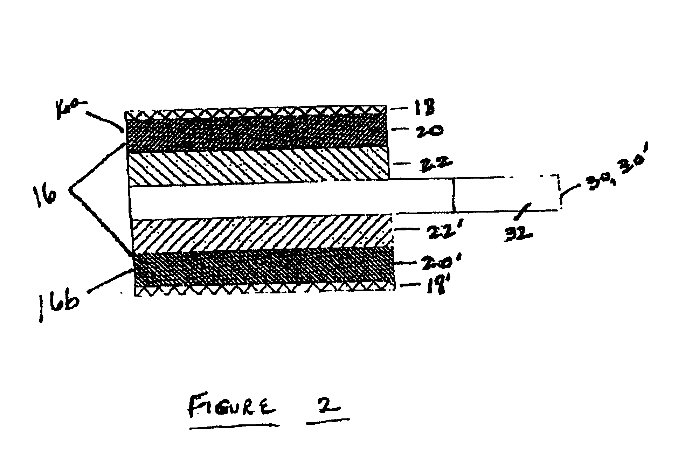

Now referring to the Figures 1 and 2, wherein like elements are identically numbered, an electrochemical cell assembly 10 of the present invention is provided which includes an electrochemical cell 12 having a plurality of bi-cells 14 therewithin. Bi-cells 14 may be manufactured in separate, contiguous compartments wherein a plurality of anode, cathode and separator members are subjected to heat lamination and cutting. After cutting of the members into individual cells, the cells are inserted into the compartments and the compartments are hermetically sealed thereafter. Cell 12 may alternatively be arranged in a Z-shaped manifold wherein each bi-cell 14 includes an anode of predetermined shape and size interposed between a pair of planar separator films acting as a substrate. On a face of each separator film not in contact with an anode, a cathode is positioned thereon so as to be in overlying registry with a corresponding anode. Folds are thereafter effected at bi-cell interfaces defined by spaces between the bi-cells where the separator film connects adjacent bi-cells in overlying registry with one another. This latter embodiment is further described in commonly assigned U.S. Patent Application No. 09/405,200. Electrochemical cell assembly 10 further includes a final closure scaling member, shown herein as a plastic cell casing 16. Cell casing 16 includes an upper sealing layer 16a and a lower sealing layer 16b in overlying registry with one another. As further shown in Figure 2, sealing member 16 incorporates a laminate-type structure for sealing electrochemical cell 12 along sealing rims 17. As specifically shown, each of upper sealing layer 16a and lower sealing layer 16b incorporates a minimum of three layers. Polymer covers 18 and 18' are made of a polymer having superior mechanical integrity, such as polyester or nylon, for insulative protection and hermetic sealing of electrochemical cell assembly 10. Metal layers 20 and 20' are fabricated from a lightweight material such as aluminum so as to provide an additional hermetic moisture barrier thereby. Adhesive layers 22 and 22'are provided for additional hermeticity and heat sealed to one another to a predetermined width. The material composition of adhesive layers 22 and 22' varies based upon manufacturing and performance requirements, however, examples of desirable materials for use herein include polyolefins such as polyethylene, ionomer resins of poly(ethylene methacrylate) such as Surlyn (a registered trademark of DuPont Company) or laminating adhesives such as Adcote (a registered trademark of Morton International). Although three distinct layers are shown as comprising each of layers 16a and 16b, it is understood that this configuration of sealing member 16 is merely illustrative and that the total number of layers may vary depending on the needs of the battery manufacturer and the end use of the battery. For example, there could be layers between the adhesive and metal layers, as well as between metal and polymer layers, so as to improve interlayer bonding.

As mentioned hereinabove, a problem inherent in sealing an electrochemical cell within a flexible plastic cell casing such as sealing member 16 is the requirement for contact leads that establish electrical communication between cell 12 and a device within which the cell is employed. Such contact leads often take the form of metal tabs such as aluminum tab 30 and copper tab 30'. Tabs 30 ad 30' are fabricated from metal conducive to electrical communication with the anodes and cathodes of cell 12. Tabs 30 and 30' thus act as barriers between adhesive layers 22 and 22' and prevent the formation of an optimally hermetic seal therebetween. To mitigate this problem, the present invention incorporates a pretreatment of metal tabs 30 and 30' prior to sealing of sealing member 16.

Now the manufacture of cell assembly 10 can be described.

The preparation of metal tabs 30 and 30' for sealing purposes is carried out in the following manner. Tabs 30 and 30' are washed in a preselected solvent such as acetone so as to remove and processing oils or debris from the tab surfaces. The tabs are dried and thereafter coated with a heat-sealable, adhesive material such as polyethylene or other polyolefin, Surlyn, Adcote or other material that is sealingly compatible with the materials used to fabricate sealing member 16. The coating is applied by dip-coating, spray coating, roll coating, brushing or any other commonly used coating procedure. Tabs 30 and 30' are then dried and then placed in an oven to melt the adhesive. The adhesive flows and uniformly wets and coats the surface of the metal tabs, forming a strong metal-adhesive bond. Each tab is then welded to a corresponding current collector and beat sealed within the sealing member 16. The seal provides cell 12 with a reduced, aesthetic profile and does not hinder the insertion of cell 12 into a receptacle therefor wherein conservation of space is at a premium.

Illustrations of the execution of the above-described process are provided in the following examples. It is understood that these examples are merely illustrative of the types of material combinations anticipated by this disclosure and in no way limit the application thereof in the manufacture of hermetically sealed electrochemical cells.

### EXAMPLE 1

An aluminum foil current collector having a thickness of 50 m is washed with acetone or similar solvent to remove any processing oil from its surface and then dried. Using a spray gun and an aqueous suspension of EAA adhesive, an aluminum tab is coated with a 5 m layer of the adhesive. The aluminum tab is then placed in an oven at approximately 250°C and sintered for about 5 minutes. This heat-treatment causes the EAA to melt and flow, thereby evenly covering the aluminum tab surface. The aluminum tab is then welded to the aluminum grid of the cell. A copper tab is treated in the same manner and welded to a copper foil current collector of the cell, thereby forming an electrode stack. The electrode stack is then placed inside a plastic sealing pouch. The pouch is heat sealed around the stack at a temperature of about 130°C and a pressure of about 68.95 KPa (10 psi). The seal is hermetic and can withstand elevated temperature storage without leakage.

### EXAMPLE 2

An aluminum foil current collector having a thickness of 50 m is washed with acetone to remove any processing oil from its surface and then dried. An aluminum tab is then roll-coated with a mixture of 50% of Adcote (a registered trademark of Morton International) and 50% ethanol. The aluminum tab is then placed in an oven at approximately 250°C and sintered for about 5 minutes. This heat-treatment causes the adhesive to melt and flow, thereby evenly covering the aluminum tab surface. The tab is then welded to the aluminum foil of the cell. A copper tab is likewise treated and welded to a copper foil current collector of the cell, thereby forming an electrode stack. The electrode stack is then placed inside a plastic sealing pouch and heat sealed therewithin at a temperature of approximately 130°C and a pressure of about 68.95 KPa (10 psi.)

The seal employed in the current inventive process achieves hermeticity while being able to withstand elevated temperature storage without leakage. Because many applications require the battery of the present invention to be frequently recharged, the battery remains easily manipulable between a battery-powered device and a recharger. The battery is therefore compatible with various connector configurations, such that the same battery can potentially be used with numerous types of devices.

Various changes to the foregoing described and shown structures would now be evident to those skilled in the art. Accordingly, the particularly disclosed scope of the invention is set forth in the following claims.

## Claims

1. A method of manufacturing an electrochemical cell, comprising the steps of
providing each of a negative electrode material and a positive electrode material wherein said electrode materials are in operative electrical association with each other;
providing each of a negative current collector and a positive current collector;
providing contact leads as positive and negative terminals for each of said negative and positive electrode materials wherein said contact leads extend outwardly from an electrochemical cell package within which said electrode materials are housed;
applying a coating of a hermetically sealing adhesive composition to said contact tabs so as to evenly cover said tabs thereby; and
inserting said electrochemical cell package in sealing registry within a final closure sealing member such that said contact leads protrude therethrough.

2. The manufacturing method of claim 1 wherein said adhesive composition is selected from the group of materials consisting of polyolefins, ionomer resins and lubricating adhesives.

3. The manufacturing method of claim 1 or claim 2 wherein said applying step is executed by a method selected from the group of coating methods consisting of dip coating, spray coating, roll-coating and brushing.

4. The manufacturing method of any one of claims 1 to 3 further comprising the step of heat treating said contact leads after said applying step.

5. The manufacturing method of claim 4 wherein said metal tabs are heat treated at a temperature of from about 150°C to about 375°C.

6. The manufacturing method of any one of claims 1 to 5 wherein said cell is heat sealed within said final closure sealing member.

7. The manufacturing method of any one of claims 1 to 6 wherein said sealing member comprises a plastic cell casing.

8. The manufacturing method of claim 7 wherein said cell casing further includes an upper sealing layer and a lower sealing layer in overlying registry with one another.

9. The manufacturing method of claim 8 wherein each of said upper and lower sealing layers includes multiple layers therewithin.

10. The manufacturing method of claim 9 wherein said layers further include each of a polymer cover, a metal layer and an adhesive layer.

11. The manufacturing method of any one of claims 1 to 10 wherein one of said contact leads is fabricated from aluminium.

12. The manufacturing method of claim 11 wherein a second one of said contact leads is fabricated from copper.

13. A hermetically sealed electrochemical cell assembly, comprising:
an electrochemical cell comprising:
a negative electrode material and a positive electrode material wherein said electrode materials are in operative electrical association with each other;
a negative current collector;
a positive current collector; and
contact leads serving as positive and negative terminals for each of said negative and positive electrode materials wherein said contact leads extend outwardly from an electrochemical cell package within which said electrode materials are housed;
a coating of a hermetically sealing adhesive composition applied to said contact tabs so as to evenly cover said tabs thereby; and
a final closure sealing member within which said electrochemical cell package is inserted in sealing registry such that said contact leads protrude therethrough.

14. The electrochemical cell assembly of claim 13 wherein said coating is selected from the group of material consisting of polyolefins, ionomer resins and lubricating adhesives.

15. The electrochemical cell assembly of claim 13 or claim 14 wherein said coating is applied by a method selected from the group of coating methods consisting of dip coating, spray coating, roll-coating and brushing.

16. The electrochemical cell assembly of any one of claims 13 to 15 wherein said contact leads are heat treated after application of said coating thereto.

17. The electrochemical cell assembly of claim 16 wherein said metal tabs are heat treated at a temperature of from about 150°C to about 375°C.

18. The electrochemical cell assembly of any one of claims 13 to 17 wherein said cell is heat sealed within said final closure sealing member.

19. The electrochemical cell assembly of any one of claims 13 to 18 wherein said sealing member comprises a plastic cell casing.

20. The electrochemical cell assembly of claim 19 wherein said cell casing further includes an upper sealing layer and a lower sealing layer in overlying registry with one another.

21. The electrochemical cell assembly of claim 20 wherein each of said upper and lower sealing layers includes multiple layers therewithin.

22. The electrochemical cell assembly of claim 21 wherein said layers further include each of a polymer cover, a metal later and an adhesive layer.

23. The electrochemical cell assembly of any one of claims 13 to 22 wherein one of said contact leads is fabricated from aluminium.

24. The electrochemical cell assembly of any one of claims 13 to 23 wherein one of said contact leads is fabricated from copper.

25. The electrochemical cell assembly of any one of claims 13 to 24 wherein said electrochemical cell further includes a plurality of bi-cells.

26. The electrochemical cell assembly of claim 25 wherein said bi-cells are manufactured in separate, contiguous compartments from a plurality of anode, cathode and separator members that are subjected to heat lamination and cutting.

27. The electrochemical cell assembly of claim 26 wherein said members are cut into individual cells and inserted into said compartments.

28. The electrochemical cell assembly of claim 27 wherein said compartments are hermetically sealed after insertion of said members therein.

29. The electrochemical cell assembly of any one of claims 25 to 28 wherein each bi-cell includes an anode of predetermined shape and size interposed between a pair of planar separator films acting as a substrate.

30. The electrochemical cell assembly of claim 29 wherein a cathode is positioned on a face of each said separator film not in contact with said anode so as to be in overlying registry therewith.

31. The electrochemical cell assembly of claim 30 wherein folds are effected at bi-cell interfaces defined by spaces between said bi-cells where said separator film connects adjacent bi-cells in overlying registry with one another so as to form a Z-shaped manifold.

## Patentansprüche

1. Ein Verfahren zum Herstellen einer elektrochemischen Zelle, enthaltend die Stufen:
Besorgen jeweils eines negativen und eines positiven Elektrodenmaterials, wobei die Elektrodenmaterialien miteinander in betrieblicher elektrischer Zusammenwirkung stehen,
Besorgen jeweils eines negativen und eines positiven Stromkollektors,
Besorgen von Kontaktleitungen als positiver und negativer Anschluß für jedes negative und positive Elektrodenmaterial, wobei die Kontaktleitungen von einer elektrochemischen Zellenpackung, in der die Elektrodenmaterialien untergebracht sind, nach außen verlaufen,
Auftragen eines Überzugs einer hermetisch abdichtenden Klebeverbindung an die Kontaktnasen, um diese dadurch gleichmäßig abzudecken, und
Einsetzen der elektrochemischen Zellenpackung in dichtender Übereinstimmung in ein endgültiges Abschlußdichtglied derart, daß die Kontaktleitungen durch dieses durchtreten.

2. Das Herstellungsverfahren nach Anspruch 1, wobei die Klebeverbindung aus der Gruppe der Materialien bestehend aus Polyolefinen, lonomerharzen und schmierenden Klebestoffen ausgewählt wird.

3. Das Herstellungsverfahren nach Anspruch 1 oder Anspruch 2, wobei die Auftragstufe mit einem Verfahren ausgewählt aus der Gruppe der Überzugsverfahren bestehend aus Überziehen durch Eintauchen, Überziehen durch Aufsprühen, Überziehen durch Rollen und Bürsten durchgeführt wird.

4. Das Herstellungsverfahren nach irgendeinem der Ansprüche 1 bis 3, weiter enthaltend die Stufe der Wärmebehandlung der Kontaktleitungen nach der Auftragsstufe.

5. Das Herstellungsverfahren nach Anspruch 4, wobei die Metallnasen bei einer Temperatur von etwa 150°C bis etwa 375°C wärmebehandelt werden.

6. Das Herstellungsverfahren nach irgendeinem der Ansprüche 1 bis 5, wobei die Zelle in dem endgültigen Abschlußdichtglied wärmeversiegelt wird.

7. Das Herstellungsverfahren nach irgendeinem der Ansprüche 1 bis 6, wobei das Abdichtglied eine zellenförmige Kapsel aus Kunststoff ist.

8. Das Herstellungsverfahren nach Anspruch 7, wobei die zellenförmige Kapsel weiter eine obere und eine untere Abdichtlage aufweist, die in Deckung miteinander übereinanderliegen.

9. Das Herstellungsverfahren nach Anspruch 8, wobei die obere und die untere Abdichtschicht jeweils Mehrfachschichten aufweisen.

10. Das Herstellungsverfahren nach Anspruch 9, wobei die Schichten weiter je eine Polymerabdeckung, eine Metall- und eine Klebeschicht aufweisen.

11. Das Herstellungsverfahren nach irgendeinem der Ansprüche 1 bis 10, wobei eine der Kontaktleitungen aus Aluminium hergestellt ist.

12. Das Herstellungsverfahren nach Anspruch 11, wobei eine zweite der Kontaktleitungen aus Kupfer hergestellt ist.

13. Eine hermetisch abgedichtete elektrochemische Zellenanordnung, bestehend aus:
einer elektrochemischen Zelle aus:
einem negativen und einem positiven Elektrodenmaterial, wobei die Elektrodenmaterialien miteinander in betrieblicher elektrischer Zusammenwirkung stehen,
einem negativen Stromkollektor,
einem positiven Stromkollektor und
als positiver und negativer Anschluß für jedes negative und positive Elektrodenmaterial dienenden Kontaktleitungen, die von einer elektrochemischen Zellenpackung, in der die Elektrodenmaterialien untergebracht sind, nach außen verlaufen,
einem Überzug einer hermetisch abdichtenden Klebeverbindung an den Kontaktnasen, um diese dadurch gleichmäßig abzudecken, und
einem endgültigen Abschlußdichtglied, in das die elektrochemische Zellenpackung in dichtender Übereinstimmung derart eingesetzt ist, daß die Kontaktleitungen durch es durchtreten.

14. Die elektrochemische Zellenanordnung nach Anspruch 13, wobei der Überzug aus der Gruppe der Polyolefine, lonomerharze und schmierenden Klebestoffe ausgewählt ist.

15. Die elektrochemische Zellenanordnung nach Anspruch 13 oder Anspruch 14, wobei der Überzug durch ein Verfahren ausgewählt aus der Gruppe der Überzugsverfahren bestehend aus Überziehen durch Eintauchen, Überziehen durch Aufsprühen, Überziehen durch Rollen und Bürsten aufgetragen wird.

16. Die elektrochemischen Zellenanordnung nach irgendeinem der Ansprüche 13 bis 15, wobei die Kontaktleitungen nach dem Aufbringen des Überzugs auf sie wärmebehandelt werden.

17. Die elektrochemische Zellenanordnung nach Anspruch 16, wobei die Metallnasen bei einer Temperatur von etwa 150°C bis etwa 375°C wärmebehandelt werden.

18. Die elektrochemische Zellenanordnung nach irgendeinem der Ansprüche 13 bis 17, wobei die Zelle in dem endgültigen Abschlußdichtglied wärmebehandelt wird.

19. Die elektrochemische Zellenanordnung nach irgendeinem der Ansprüche 13 bis 18, wobei das Abdichtglied eine kapselförmige Zelle aus Kunststoff ist.

20. Die elektrochemische Zellenanordnung nach Anspruch 19, wobei die zellenförmige Kapsel weiter eine obere und eine untere Abdichtlage aufweist, die in Deckung miteinander übereinanderliegen.

21. Die elektrochemische Zellenanordnung nach Anspruch 20, wobei die obere und die untere Abdichtschicht jeweils Mehrfachschichten aufweisen.

22. Die elektrochemische Zellenanordnung nach Anspruch 21, wobei die Schichten weiter je eine Polymerabdeckung, eine Metall- und eine Klebeschicht aufweisen.

23. Die elektrochemische Zellenanordnung nach irgendeinem der Ansprüche 13 bis 22, wobei eine der Kontaktleitungen aus Aluminium hergestellt ist.

24. Die elektrochemische Zellenanordnung nach irgendeinem der Ansprüche 13 bis 23, wobei eine der Kontaktleitungen aus Kupfer hergestellt ist.

25. Die elektrochemische Zellenanordnung nach irgendeinem der Ansprüche 13 bis 24, wobei die elektrochemische Zelle weiter eine Vielzahl von Bizellen enthält.

26. Die elektrochemische Zellenanordnung nach Anspruch 25, wobei die Bizellen in getrennten, aneinander anstoßenden Abteilen aus einer Vielzahl von Anoden-, Kathoden- und Separatorgliedern, die einer Wärmelaminierung und einem Schneiden ausgesetzt werden, hergestellt werden.

27. Die elektrochemische Zellenanordnung nach Anspruch 26, wobei die Glieder in einzelne Zellen geschnitten und in die Abteile eingesetzt werden.

28. Die elektrochemische Zellenanordnung nach Anspruch 27, wobei die Abteile nach dem Einsetzen der Glieder in sie hermetisch abgedichtet werden.

29. Die elektrochemische Zellenanordnung nach irgendeinem der Ansprüche 25 bis 28, wobei jede Bizelle eine Anode mit vorgegebener Form und Größe aufweist, die zwischen zwei als ein Substrat wirkenden planaren Separatorfilmen eingelegt ist.

30. Die elektrochemische Zellenanordnung nach Anspruch 29, wobei eine Kathode auf eine Seite jedes Separatorfilms ohne Kontakt mit der Anode so aufgelegt ist, daß sie sich mit ihm in übereinanderliegender Deckung befindet.

31. Die elektrochemische Zellenanordnung nach Anspruch 30, wobei an Bizellentrennschichten, die durch Räume zwischen den Bizellen begrenzt werden, an denen der Separatorfilm benachbarte Bizellen in übereinanderliegender Deckung miteinander verbindet, so daß eine Z-förmige Sammelleitung entsteht, Faltungen bewirkt werden.

## Revendications

1. Procédé de fabrication d'une cellule électrochimique, comportant les étapes consistant à :
agencer chaque matériau parmi un matériau d'électrode négative et un matériau d'électrode positive, lesdits matériaux d'électrode étant en association électrique opérationnelle l'un avec l'autre,
agencer chaque collecteur parmi un collecteur de courant négatif et un collecteur de courant positif,
agencer des conducteurs de contact en tant que bornes positive et négative pour chacun desdits matériaux d'électrode négative et positive, lesdits conducteurs de contact s'étendant vers l'extérieur depuis un boîtier de cellule électrochimique dans lequel lesdits matériaux d'électrode sont enfermés,
appliquer un revêtement constitué d'une composition adhésive d'étanchéité hermétique auxdites pattes de contact de manière à recouvrir de manière régulière lesdites pattes, et
insérer ledit boîtier de cellule électrochimique en alignement étanche dans un élément d'étanchéité de fermeture finale de sorte que lesdits conducteurs de contact font saillie depuis celui-ci.

2. Procédé de fabrication selon la revendication 1, dans lequel ladite composition adhésive est sélectionnée parmi le groupe de matériaux constitué de polyoléfines, résines ionomères et adhésifs lubrifiants.

3. Procédé de fabrication selon la revendication 1 ou 2, dans lequel ladite étape d'application est effectuée par un procédé sélectionné parmi le groupe de procédés de revêtement constitué d'un revêtement par immersion, un revêtement par pulvérisation, un revêtement au rouleau et un brossage.

4. Procédé de fabrication selon l'une quelconque des revendications 1 à 3, comportant de plus l'étape de traitement thermique desdits conducteurs de contact après ladite étape d'application.

5. Procédé de fabrication selon la revendication 4, dans lequel lesdites pattes métalliques sont traitées thermiquement à une température comprise entre environ 150°C et environ 375°C.

6. Procédé de fabrication selon l'une quelconque des revendications 1 à 5, dans lequel ladite cellule est rendue étanche thermiquement dans ledit élément d'étanchéité de fermeture finale.

7. Procédé de fabrication selon l'une quelconque des revendications 1 à 6, dans lequel ledit élément d'étanchéité comporte un carter de cellule en matière plastique.

8. Procédé de fabrication selon la revendication 7, dans lequel ledit carter de cellule comporte de plus une couche d'étanchéification supérieure et une couche d'étanchéification inférieure superposée en alignement l'une avec l'autre.

9. Procédé de fabrication selon la revendication 8, dans lequel chacune desdites couches d'étanchéification supérieure et inférieure comporte de multiples couches à l'intérieur de celles-ci.

10. Procédé de fabrication selon la revendication 9, dans lequel lesdites couches comportent chacune les couches suivantes : un couvercle polymère, une couche métallique et une couche adhésive.

11. Procédé de fabrication selon l'une quelconque des revendications 1 à 10, dans lequel un desdits conducteurs de contact est fabriqué à partir d'aluminium.

12. Procédé de fabrication selon la revendication 11, dans lequel un second desdits conducteurs de contact est fabriqué à partir de cuivre.

13. Ensemble de cellule électrochimique rendue étanche hermétiquement, comportant :
une cellule électrochimique comportant :
un matériau d'électrode négative et un matériau d'électrode positive, lesdits matériaux d'électrode étant en association électrique opérationnelle l'un avec l'autre,
un collecteur de courant négatif,
un collecteur de courant positif, et
des conducteurs de contact servant en tant que bornes positive et négative pour chacun desdits matériaux d'électrode négative et positive, lesdits conducteurs de contact s'étendant vers l'extérieur depuis un boîtier de cellule électrochimique dans lequel lesdits matériaux d'électrode sont enfermés,
un revêtement constitué d'une composition adhésive d'étanchéité hermétique appliqué auxdites pattes de contact de manière à recouvrir de manière régulière lesdites pattes, et
un élément d'étanchéité de fermeture finale au sein duquel ledit boîtier de cellule électrochimique est insérée en alignement étanche de sorte que lesdits conducteurs de contact font saillie depuis celui-ci.

14. Ensemble de cellule électrochimique selon la revendication 13, dans lequel ledit revêtement est sélectionné parmi le groupe de matériaux constitué de polyoléfines, résines ionomères et adhésifs lubrifiants.

15. Ensemble de cellule électrochimique selon la revendication 13 ou 14, dans lequel ledit revêtement est appliqué par un procédé sélectionné parmi le groupe de procédés de revêtement constitué d'un revêtement par immersion, un revêtement par pulvérisation, un revêtement au rouleau et un brossage.

16. Ensemble de cellule électrochimique selon l'une quelconque des revendications 13 à 15, dans lequel lesdits conducteurs de contact sont traités thermiquement après application dudit revêtement à ceux-ci.

17. Ensemble de cellule électrochimique selon la revendication 16, dans lequel lesdites pattes métalliques sont traitées thermiquement à une température comprise entre environ 150°C et environ 375°C.

18. Ensemble de cellule électrochimique selon l'une quelconque des revendications 13 à 17, dans lequel ladite cellule est rendue étanche thermiquement dans ledit élément d'étanchéité de fermeture finale.

19. Ensemble de cellule électrochimique selon l'une quelconque des revendications 13 à 18, dans lequel ledit élément d'étanchéité comporte un carter de cellule en matière plastique.

20. Ensemble de cellule électrochimique selon la revendication 19, dans lequel ledit carter de cellule comporte de plus une couche d'étanchéification supérieure et une couche d'étanchéification inférieure superposée en alignement l'une avec l'autre.

21. Ensemble de cellule électrochimique selon la revendication 20, dans lequel chacune desdites couches d'étanchéification supérieure et inférieure comporte de multiples couches à l'intérieur de celles-ci.

22. Ensemble de cellule électrochimique selon la revendication 21, dans lequel lesdites couches comportent de chacune les couches suivantes : un couvercle polymère, une couche métallique et une couche adhésive.

23. Ensemble de cellule électrochimique selon l'une quelconque des revendications 13 à 22, dans lequel un desdits conducteurs de contact est fabriqué à partir d'aluminium.

24. Ensemble de cellule électrochimique selon l'une quelconque des revendications 13 à 23, dans lequel un desdits conducteurs de contact est fabriqué à partir de cuivre.

25. Ensemble de cellule électrochimique selon l'une quelconque des revendications 13 à 24, dans lequel ladite cellule électrochimique comporte de plus une pluralité de bi-cellules.

26. Ensemble de cellule électrochimique selon la revendication 25, dans lequel lesdites bi-cellules sont fabriquées dans des compartiments contigus séparés à partir d'une pluralité d'éléments d'anode, de cathode et de séparateur qui sont soumis à une stratification thermique et une découpe.

27. Ensemble de cellule électrochimique selon la revendication 26, dans lequel lesdits éléments sont découpés en cellules individuelles et insérés dans lesdits compartiments.

28. Ensemble de cellule électrochimique selon la revendication 27, dans lequel lesdits compartiments sont rendus étanches hermétiquement après insertion desdits éléments à l'intérieur.

29. Ensemble de cellule électrochimique selon l'une quelconque des revendications 25 à 28, dans lequel chaque bi-cellule comporte une anode ayant une forme et une taille prédéterminées interposée entre une paire de films séparateurs planaires agissant en tant que substrat.

30. Ensemble de cellule électrochimique selon la revendication 29, dans lequel une cathode est positionnée sur une face de chacun desdits films séparateurs non en contact avec ladite anode de manière à être superposée en alignement avec celle-ci.

31. Ensemble de cellule électrochimique selon la revendication 30, dans lequel des plis sont effectués au niveau d'interfaces de bi-cellules définis par des espaces entre lesdites bi-cellules lorsque ledit film séparateur relie des bi-cellules adjacentes superposées en alignement les unes avec les autres de manière à former un collecteur en forme de Z.
